(19)

Europäisches Patentamt
European Patent Office
Office européen des brevets

(11) **EP 2 940 857 B1**

(12) **EUROPÄISCHE PATENTSCHRIFT**

(45) Veröffentlichungstag und Bekanntmachung des Hinweises auf die Patenterteilung:
**28.11.2018   Patentblatt 2018/48**

(51) Int Cl.:
*H02P 7/06* (2006.01)          *G05B 17/02* (2006.01)

(21) Anmeldenummer: **14166171.0**

(22) Anmeldetag: **28.04.2014**

(54) **Verfahren zur Nachbildung eines dreiphasigen bürstenlosen Gleichstrommotors mit einem Lastemulator**

Method for emulating a three-phase brushless DC motor with a load emulator

Procédé de reproduction d'un moteur à courant continu sans brosse triphasé doté d'un émulateur de charge

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.11.2015   Patentblatt 2015/45**

(73) Patentinhaber: **dSPACE digital signal processing and**
**control engineering GmbH**
**33102 Paderborn (DE)**

(72) Erfinder: **Holthaus, Nils**
**33186 Schlangen (DE)**

(56) Entgegenhaltungen:
DE-A1-102005 048 464      US-A1- 2009 033 259
US-A1- 2010 039 120

EP 2 940 857 B1

**Beschreibung**

Die Erfindung betrifft ein Verfahren zur Nachbildung eines dreiphasigen bürstenlosen Gleichstrommotors mit einem Lastemulator, wobei der Lastemulator dreiphasig über seine Lastanschlüsse an die Speiseanschlüsse einer Motorsteuerung angeschlossen ist und der Lastemulator eine Emulatorleistungselektronik und eine Emulatorsteuerung zur Steuerung der Emulatorleistungselektronik aufweist, wobei die Emulatorsteuerung die von der Motorsteuerung angesteuerten Speiseanschlüsse und nicht angesteuerten Speiseanschlüsse ermittelt, und die Emulatorleistungselektronik durch die Emulatorsteuerung so angesteuert wird, dass in den durch die Motorsteuerung angesteuerten Speiseanschlüssen von der Emulatorsteuerung auf Grundlage eines Motormodells berechnete Phasenströme $i_{emulate}$ fließen und auf den von der Motorsteuerung nicht angesteuerten Speiseanschluss eine von der Emulatorsteuerung auf Grundlage eines Motormodells berechnete Phasenspannung $v_{emulate}$ aufgegeben wird. Die Erfindung betrifft ferner auch die Emulatorsteuerung eines Lastemulators, die so ausgestaltet ist, dass sie das zuvor beschriebene Verfahren zur Nachbildung eines dreiphasigen bürstenlosen Gleichstrommotors in Zusammenhang mit einer Emulatorleistungselektronik ausführen kann.

Verfahren zur Nachbildung elektrischer Lasten mit Hilfe von Lastemulatoren dienen dazu, Motorsteuerungen unter Laborbedingungen zu testen, ohne dass an den Steuerungen ein "echter" elektrischer Antrieb - hier in Form eines dreiphasigen bürstenlosen Gleichstrommotors - anzuschließen wäre. Die elektrische Last, also der dreiphasige bürstenlose Gleichstrommotor, wird vielmehr von dem Lastemulator nachgebildet. Die Motorsteuerung besteht oft aus einem Steuergerät mit einer Leistungsendstufe in Form eines Umrichters. Das Steuergerät erzeugt Stromrichtersteuerdaten, die zur geeigneten Ansteuerung der Leistungsschalter des Umrichters dienen, die üblicherweise mittels Halbleiterschaltelementen (IGBT, IGCT usw.) realisiert sind. Im vorliegend betrachteten Anwendungsfall arbeitet der Umrichter der Motorsteuerung als Wechselrichter, er weist also als Energiequelle eine Gleichspannungsquelle auf und treibt eine Last mit Wechselspannung. Ein im Stand der Technik übliches Verfahren zur Nachbildung elektrischer Lasten mit Hilfe von Lastemulatoren ist dargestellt im Artikel "E-Motoren: HIL-Test mit voller Leistung", verfasst von Dr. Thomas Schulte, Nils Holthaus und Markus Plöger, erschienen Februar 2010 im Fachmagazin "Automobil-Elektronik".

Der Lastemulator wird oft in Form eines Hardware-in-the-Loop-Simulators realisiert, also durch einen Simulationsrechner, der mathematische Modelle der zu simulierenden Umgebung - hier die Last in Form des bürstenlosen Gleichstrommotors - mit numerischen Verfahren berechnet und seinerseits über eine leistungselektronische Endstufe - die Emulatorleistungselektronik - verfügt, die über die Lastanschlüsse des Lastemulators mit den korrespondierenden Speiseanschlüssen der Motorsteuerung verbunden werden kann. Das auf dem Lastemulator implementierte Verfahren zur Nachbildung eines dreiphasigen bürstenlosen Gleichstrommotors sorgt im Ergebnis dafür, dass die Motorsteuerung über ihre Speiseanschlüsse elektrisch so belastet wird, als wäre sie mit dem echten Antrieb verbunden.

Bürstenlose Gleichstrommotoren arbeiten - anders, als es der Name vermuten lässt - wie permanent erregte Drehstrom-Synchronmaschinen und sind aufgrund der bürstenlosen Konstruktion verschleiß- und wartungsarm. Im industriellen Umfeld, wie beispielsweise im automotiven Bereich, werden bürstenlose Gleichstrommotoren oft als Antriebe von Nebenaggregaten verwendet, wie z. B. Pumpenantriebe (Öl, Kraftstoff) und Stellantriebe (Schaltgetriebe, Kupplungen, Leuchtweitenregulierungen, Ventile/Klappen).

Bei blockkommutiert angesteuerten bürstenlosen Gleichstrommotoren werden von der Motorsteuerung immer zwei der drei Motorphasen angesteuert - zwei der drei Speiseanschlüsse der Motorsteuerungen sind dann angesteuert - und die dritte Phase der dreiphasigen Drehstromwicklung wird durch die Motorsteuerungen nicht angesteuert, der entsprechende Speiseanschluss der Motorsteuerung ist dann ebenfalls nicht angesteuert. Durch periodisches Umschalten der Drehstromwicklungen durch die Motorsteuerung wird ein magnetisches Drehfeld erzeugt. In der von der Motorsteuerung nicht angesteuerten Phase des bürstenlosen Gleichstrommotors sinkt der Phasenstrom ab und kommt bald vollständig zum Erliegen. Die nicht angesteuerte Phase des bürstenlosen Gleichstrommotors wird oft auch als unbestromte Phase bezeichnet, wobei - wie zuvor erläutert - die Zustände des nicht-Angesteuertwerdens und des Unbestromtseins zeitlich auseinander fallen können. Wenn eine Phase des bürstenlosen Gleichstrommotors von der Motorsteuerung nicht mehr angesteuert wird, ist die Folge, dass der Phasenstrom in der nicht mehr angesteuerten Phase letztlich, aber nicht zwingend sofort nach der Kommutierung, zum Erliegen kommt und die Phase also tatsächlich unbestromt ist.

In der nicht angesteuerten Phase des bürstenlosen Gleichstrommotors wird jedoch eine Gegenspannung induziert, deren Erfassung für die Ansteuerung des bürstenlosen Gleichstrommotors von erheblicher Bedeutung ist, da aus ihr der Lagewinkel des Rotors bestimmbar ist und die Motorsteuerung so auch ohne einen separaten Winkelgeber den Zeitpunkt der nächsten Kommutierung, also den Zeitpunkt der Umschaltung von nicht angesteuerten Speiseanschlüssen zu angesteuerten Speiseanschlüssen und umgekehrt ermitteln kann. Deshalb ist auch bei der Emulation von blockkommutierten bürstenlosen Gleichstrommotoren die Nachbildung der in der nicht angesteuerten Phase induzierten Gegenspannung essentiell, damit die Motorsteuerung auch ohne Winkelgeber den Zeitpunkt der nächsten Kommutierung bestimmen kann. Aber auch bei mit einem Winkelgeber ausgestatteten bürstenlosen Gleichstrommotoren ist die Berechnung der Gegenspannung im Rahmen der Emulation wichtig, da nur so die physikalischen Verhältnisse des emulierten Motors und damit die Anschlusswerte richtig berechnet und nachgebildet werden können.

Die Emulatorleistungselektronik umfasst zur Beaufschlagung der Speiseanschlüsse der Motorsteuerung mit entsprechenden elektrischen Anschlusswerten Spannungsquellen und Stromquellen, die meist über Entkopplungsinduktivitäten mit den Lastanschlüssen der Emulatorleistungselektronik verbindbar sind. So kann durch entsprechendes Verbinden der Spannungsquellen und Stromquellen mit den Lastanschlüssen der Emulatorleistungselektronik darauf reagiert werden, ob ein Lastanschluss im Falle des nicht angesteuerten Zustandes durch die Motorsteuerung nur mit einer induzierten Gegenspannung beaufschlagt wird oder ein Lastanschluss im Falle des angesteuerten Zustandes durch die Motorsteuerung stromführend ist. Durch die zwischen den Lastanschlüssen und den Spannungs- bzw. Stromquellen vorgesehenen Entkopplungsinduktivitäten wird eine unverzögerte Wirkungsentfaltung der durch die geschalteten Spannungs- bzw. Stromquellen vorgegebenen elektrischen Anschlusswerte auf die Lastanschlüsse verhindert.

Da eine qualitativ hochwertige Nachbildung eines dreiphasigen bürstenlosen Gleichstrommotors mit einem Lastemulator nur dann möglich ist, wenn der Zeitpunkt der Kommutierung zuverlässig auch unter wechselnden Betriebsbedingungen erkannt wird, liegt der Erfindung die Aufgabe zugrunde, das eingangs beschriebene Verfahren zur Nachbildung eines dreiphasigen bürstenlosen Gleichstrommotors mit einem Lastemulator so anzugeben, dass eine zuverlässige Kommutierungserkennung gewährleistet ist.

Die zuvor hergeleitete Aufgabe ist bei dem eingangs beschriebenen Verfahren in einem ersten Schritt zunächst dadurch gelöst, dass der Übergang eines Speiseanschlusses j der Motorsteuerung vom nicht angesteuerten Zustand $S_{PH}(j)=1$ in den angesteuerten Zustand $S_{PH}(j)=0$ dann erkannt wird, wenn der Betrag der Differenzspannung $v_{diff}(j)$ zwischen der an dem Speiseanschluss $j$ der Motorsteuerung gemessenen Ausgangsspannung $v_{inv}(j)$ und der berechneten Phasenspannung $v_{emulate}(j)$ für eine vorbestimmte erste Zeitspanne $t_1$ größer ist als ein vorbestimmter Spannungsschwellwert $v_{TH}$.

Der beschriebenen Erkennung des Übergangs eines Speiseanschlusses der Motorsteuerung vom nicht angesteuerten Zustand in den angesteuerten Zustand liegt die Überlegung zugrunde, dass bei diesem Übergang der betroffene Speiseanschluss nicht mehr durch geöffnete Halbleiterschalter in der Motorsteuerung von der Gleichspannungsquelle der Motorsteuerung quasi "abgetrennt" ist, sondern durch wieder geschlossene Halbleiterschalter mit der Spannungsquelle der Motorsteuerungen verbunden ist und somit die gemessene Ausgangsspannung an dem betreffenden Speiseanschluss der Motorsteuerung wieder aktiv beeinflusst und damit verändert wird. Das dadurch verursachte Auseinanderfallen der gemessenen Spannung an dem Speiseanschluss und der durch das Motormodell berechneten Phasenspannung, die ja immer noch unter der Annahme des alten, unangesteuerten Zustandes vollzogen wird, ist ein zuverlässiger Indikator für eine Änderung des Schaltzustandes der Motorsteuerung und wird entsprechend genutzt. Die Fokussierung auf den Speiseanschluss der Motorsteuerung der zunächst nicht angesteuert ist, ist deshalb sinnvoll, weil dieser Speiseanschluss beim nächsten Kommutierungsereignis zwingend in den angesteuerten Zustand übergehen muss, also zwingend einem Zustandswechsel unterliegt.

In einem weiteren Schritt des erfindungsgemäßen Verfahrens ist vorgesehen, dass nach Erkennung des Zustandsübergangs des Speiseanschlusses j der Motorsteuerung vom nicht angesteuerten Zustand $S_{PH}(j)=1$ in den angesteuerten Zustand $S_{PH}(j)=0$ die Emulatorsteuerung die Emulatorleistungselektronik so ansteuert, dass über den nunmehr durch die Motorsteuerung angesteuerten Speiseanschluss j der von der Emulatorsteuerung berechnete Phasenstrom $i_{emulate}$ fließt. In der Praxis erfährt das von der Emulatorsteuerung umfasste Motormodell bei Erkennung eines Kommutierungsvorganges eine Strukturumschaltung hinsichtlich der mit dem Speiseanschluss j verbundenen Phase des Motors, so dass eine Berechnung entsprechend angepasst wird. Die Emulatorsteuerung schaltet dann insbesondere in der Emulatorleistungselektronik auf den betroffenen Lastanschluss eine Stromquelle, damit in der entsprechenden Phase der berechnete Phasenstrom eingestellt werden kann. Da mit dem berechneten Phasenstrom der positive und negative Vorzeichenbereich abgedeckt werden soll, fungiert die Stromquelle der Emulatorleistungselektronik auch als Stromsenke. Wenn im Folgenden die Rede von einer Stromquelle ist, umfasst diese daher auch immer die Funktionalität einer Stromsenke.

Für die zuverlässige Erkennung des Übergangs eines Speiseanschlusses vom nicht angesteuerten Zustand in den angesteuerten Zustand ist eine geeignete Wahl des vorbestimmten Spannungsschwellwertes $v_{TH}$ wesentlich. In einer bevorzugten Ausgestaltung ist vorgesehen, dass der Spannungsschwellwert $v_{TH}$ so bemessen ist, dass er größer ist als die während eines konstanten Schaltzustandes der Motorsteuerung und damit der Emulatorleistungselektronik zu erwartende maximale Abweichung zwischen der berechneten Phasenspannung $v_{emulate}$ in der Phase des nicht angesteuerten Speiseanschlusses $j$ und der tatsächlich zurückgemessenen Spannung $v_{inv}(j)$ am nicht angesteuerten Speiseanschlusses $j$. Die vorgenannten Abweichungen sind in erster Linie durch Überschwingungen aufgrund von kapazitiven Effekten bei Spannungssollsprüngen zu erwarten. Sie sind in der Regel abhängig von dem Spannungshub, der für die unangesteuerte bzw. unbestromte Phase emuliert werden muss; die Abweichung ist damit abhängig von der Zwischenkreisspannung der Motorsteuerung. Aus diesem Grunde ist insbesondere vorgesehen, dass der Spannungsschwellwert $v_{TH}$ als ein Bruchteil der Zwischenkreisspannung $v_{DC\_Link}$ der Motor-steuerung gewählt wird, vorzugsweise kleiner als die Hälfte der Zwischenkreisspannung $v_{DC\_Link}$ gewählt wird, ganz bevorzugt zu einem Fünftel der Zwischenkreisspannung $v_{DC\_Link}$ der Motorsteuerung gewählt wird.

Hinsichtlich der Wahl der vorbestimmten ersten Zeitspanne $t_1$ ist bei einem bevorzugten Ausführungsbeispiel vorgesehen, dass die vorbestimmte erste Zeitspanne $t_1$ größer gewählt wird als zu erwartende transiente Spannungsverzerrungen und/oder dass die vorbestimmte erste Zeitspanne $t_1$ größer gewählt wird als die Latenz der Spannungseinprägung durch die Emulatorsteuerung und die Emulatorleistungselektronik, vorzugsweise sollte die vorbestimmte erste Zeitspanne $t_1$ größer gewählt werden als die größte der beiden vorgenannten Zeitdauern. Die zu erwartenden transienten Spannungsverzerrungen können durch elektromagnetische Einstrahlungen bedingt sein, die ihrerseits umgebungs- und aufbauabhängig sind und vor Ort entsprechend ermittelt werden müssen. Bei der Nachbildung von dreiphasigen bürstenlosen Gleichstrommotoren, die in Nebenaggregaten im automotiven Bereich Anwendung finden, liegt die Zeitspanne $t_1$ erfahrungsgemäß im einstelligen Bereich von Mikrosekunden.

Während das Schicksal der nicht angesteuerten und damit schlussendlich unbestromten Phase bei dem nächsten Kommutierungsvorgang eindeutig ist - die Phase bzw. der Speiseanschluss der Motorsteuerung wechselt vom nicht angesteuerten Zustand in den angesteuerten Zustand -, ist das Schicksal eines zuvor angesteuerten Speiseanschlusses ungewiss, denn der Speiseanschluss kann beim nächsten Kommutierungsvorgang angesteuert bleiben, er kann aber auch in den nicht angesteuerten Zustand wechseln. Es muss demnach herausgefunden werden, welcher Speiseanschluss der Motorsteuerung, der zuvor im angesteuerten Zustand gewesen ist, in den nicht angesteuerten Zustand wechselt bzw. im angesteuerten Zustand verbleibt.

Gemäß einer ersten Weiterbildung der Erfindung ist vorgesehen, dass der Übergang eines Speiseanschlusses $k$ der Motorsteuerung vom angesteuerten Zustand $S_{PH}(k)=0$ in den nicht angesteuerten Zustand $S_{PH}(k)=1$ strombasiert dann erkannt wird, wenn der berechnete Phasenstrom $i_{emulate}$ über den Lastanschluss $k$ des Lastemulators und damit über den korrespondierenden Speiseanschluss k als Null erfasst wird. Diesem Kriterium liegt die Erkenntnis zugrunde, dass der Strom in einer über einen zunächst angesteuerten Speiseanschluss der Motorsteuerung mit Spannung versorgten Phase fließt, dieser Phasenstrom aber in dem nicht mehr angesteuerten Zustand des Speiseanschlusses letztendlich zum Erliegen kommt.

In einer Weiterbildung des erfindungsgemäßen Verfahrens hat es sich als besonders vorteilhaft herausgestellt, dass die zuvor beschriebene strombasierte Erkennung des Zustandswechsels der Motorsteuerung eines Speiseanschlusses k vom angesteuerten Zustand $S_{PH}(k)=0$ in den nicht angesteuerten Zustand $S_{PH}(k)=1$ dann eingesetzt wird, wenn zum Zeitpunkt der Erkennung des Zustandsübergangs des Speiseanschlusses j der Motorsteuerung vom nicht angesteuerten Zustand $S_{PH}(j)=1$ in den angesteuerten Zustand $S_{PH}(j)=0$ die Beträge der berechneten Phasenströme $i_{emulate}$ der angesteuerten Speiseanschlüsse $k, l$ über einem Stromschwellwert $i_{TH}$ liegen. Durch diese Maßnahme wird erreicht, dass ein kleiner, über einen angesteuerten Speiseanschluss fließender Phasenstrom versehentlich als Nullstrom identifiziert wird. Durch das Kriterium des Stromschwellwertes $i_{TH}$ lassen sich derartige Fehler bei der Erkennung des Zustandswechsels vom angesteuerten Zustand in den nicht angesteuerten Zustand vermeiden; die strombasierte Kommutierungserkennung ist vorzugsweise dann sicher anwendbar, wenn bei einer großen Last große Phasenströme vorliegen, bei sehr kleiner Last und nur ganz geringen Phasenströmen besteht die Gefahr einer Fehlinterpretation.

Einer besonders vorteilhaften Weiterentwicklung des Verfahrens liegt die Erkenntnis zugrunde, dass eine sinnvolle Wahl des Stromschwellwertes von der Anstiegszeit des simulierten Stroms in den Motorwicklungen und damit von deren simulierter Induktivität abhängt. Um zu verhindern, dass die durch die bei einer Blockkommutierung typischen dreiphasigen pulsweitenmodulierten (PWM) Spannungen entstehenden und auch simulierten Stromrippel die Erkennung der restlichen Kommutierungsphasen verfälschen, wird um den - berechneten - Nullstrom der besagte Stromschwellwert $i_{TH}$ definiert. Dieser Stromschwellwert ist so zu setzen, dass bei einem PWM-Tastverhältnis von 50 % - dies ist der Fall mit minimalem Strom im Bereich des Nullstromes - zwischen den beiden bis zur Kommutierung angesteuerten und damit bestromten Phasen die Stromrippel keinen Nulldurchgang haben dürfen. Mit anderen Worten: Es muss zum Zeitpunkt der Kommutierungserkennung noch ein simulierter Mindeststrom durch die entsprechenden Induktivitäten der beiden angesteuerten und damit bestromten Phasen fließen, so dass durch die Stromrippel kein Stromnulldurchgang erfasst wird. Da der Spannungshub auf die Induktivitäten der beiden bis zur Kommutierung angesteuerten und damit bestromten Phasen in Reihe wirkt, und somit auch der Strom über diese Induktivitäten in Reihe fließt, muss für die Spezifikation des Schwellwertes die doppelte im Modell angenommene Phaseninduktivität $L_{PH}$ zugrunde gelegt werden. Damit ergibt sich als vernünftige und bevorzugte Wahl für den Stromschwellwert $i_{TH}$, wobei T die PWM-Spannungsperiode der Motorsteuerung ist:

$$i_{TH} = \frac{u_{DC\_Link}}{2\,L_{PH}} \frac{T}{2}.$$

Gemäß einer weiteren Ausgestaltung des erfindungsgemäßen Verfahrens wird der Übergang eines Speiseanschlusses $k$ der Motorsteuerung vom angesteuerten Zustand $S_{PH}(k)=0$ in den nicht angesteuerten Zustand $S_{PH}(k)=1$ alternativ spannungsbasiert erkannt. Hierzu ist vorgesehen, dass nach Erkennung des Zustandsübergangs des Speiseanschlusses j der Motorsteuerung vom nicht angesteuerten Zustand $S_{PH}(j)=1$ in den angesteuerten Zustand $S_{PH}(j)=0$

die Emulatorleistungselektronik so angesteuert wird, dass die anderen Anschlüsse *k, l* der Emulatorleistungselektronik über eine induktive Entkopplung auf eine vorgegebene Spannung $u_{intermediate}$ gesetzt werden. Der Übergang eines Speiseanschlusses *k* der Motorsteuerung vom angesteuerten Zustand $S_{PH}(k)=0$ in den nicht angesteuerten Zustand $S_{PH}(k)=1$ wird spannungsbasiert dann erkannt, wenn nach Abklingen des Stroms über den Speiseanschluss *k* bzw. den Lastanschluss *k* der Emulatorleistungselektronik die von der Emulatorsteuerung zurückgemessene Spannung am Speiseanschluss *k* über eine vorbestimmte zweite Zeitspanne $t_2$ gleich der vorgegebene Spannung $u_{intermediate}$ ist. Diesem spannungsbasiertem Verfahren zur Erkennung des Zustandsüberganges eines Speiseanschlusses von dem angesteuerten in den nicht angesteuerten Zustand liegt die Erkenntnis zugrunde, dass sich ein nicht angesteuerter Speiseanschluss der Motorsteuerung, der durch geöffnete Halbleiterschalter in der Motorsteuerung von der Spannungsversorgung der Motorsteuerung hochohmig abgetrennt ist, ohne weiteres auf eine vorgegebene Spannung - hier die Spannung $u_{intermediate}$ - setzen lässt. Dies ist bei einem weiterhin angesteuerten Speiseanschluss nicht möglich, da dieser maßgeblich durch die Spannungsquelle in der Motorsteuerung beeinflusst würde. Durch die induktive Entkopplung hätte eine durch die Spannungsquelle in der Emulatorleistungselektronik vorgegebene Spannung keine dauerhafte Wirkung auf die Spannung an den Speiseanschlüssen der Motorsteuerung.

Es ist bei dem Verfahren wichtig, das Abklingen des Stroms über den Speiseanschluss *k* bzw. den Lastanschluss der Emulatorleistungselektronik abzuwarten, da zu der von der Emulatorleistungselektronik vorgegebenen Spannung $u_{intermediate}$ ansonsten noch die durch den veränderlichen Strom in der Entkopplungsinduktivität hervorgerufene Spannung käme.

Es ist sinnvoll und bevorzugt, die vorgegebene Spannung $u_{intermediate}$ im Bereich der von der Motorsteuerung geschalteten Gleichspannung zu wählen, insbesondere gleich der halben Zwischenkreisspannung $v_{DC\_Link}$ der Motorsteuerung. Gemäß einer weiteren Ausgestaltung des Verfahrens ist die vorbestimmte zweite Zeitspanne $t_2$ so groß bemessen, dass auch bei niedrigen Lastströmen eine sichere Unterscheidung zwischen einem durchgängig angesteuerten Speiseanschluss und einem zuvor angesteuerten, dann aber nicht mehr angesteuerten Speiseanschluss möglich ist. In den schon erwähnten Anwendungsfällen, bei denen blockkommutierte dreiphasige bürstenlose Gleichstrommotoren als Nebenaggregate in automotiven Anwendungen verwendet werden, hat es sich als vorteilhaft herausgestellt, wenn $t_2$ im Bereich von etwa 10 μs gewählt wird.

Gemäß einer besonders vorteilhaften Ausgestaltung des Verfahrens zur Nachbildung eines dreiphasigen bürstenlosen Gleichstrommotors ist vorgesehen, dass in der Emulatorleistungselektronik sowohl das zuerst beschriebene strombasierte Verfahren zur Erkennung des Übergangs eines Speiseanschlusses der Motorsteuerung vom angesteuerten Zustand in den nicht angesteuerten Zustand implementiert ist, wie auch das danach beschriebene spannungsbasierte Verfahren zur Erkennung eines solchen Übergangs. Vorzugsweise erfolgt dann von der Emulatorsteuerung die Erkennung des Übergangs eines Speiseanschlusses *k* der Motorsteuerung vom angesteuerten Zustand $S_{PH}(k)=0$ in den nicht angesteuerten Zustand $S_{PH}(k)=1$ im Regelfall spannungsbasiert, wenn zum Zeitpunkt der Erkennung des Zustandsübergangs des Speiseanschlusses *j* der Motorsteuerung vom nicht angesteuerten Zustand $S_{PH}(j)=1$ in den angesteuerten Zustand $S_{PH}(j)=0$ die Beträge der berechneten Phasenströme $i_{emulate}$ der angesteuerten Speiseanschlüsse *k, l* unter einem Stromschwellwert $i_{TH}$ liegen. Für den Fall, dass die Beträge der berechneten Phasenströme $i_{emulate}$ der angesteuerten Speiseanschlüsse *k, l* über dem Stromschwellwert $i_{TH}$ liegen, erfolgt von der Emulatorsteuerung die Erkennung des Übergangs eines Speiseanschlusses k der Motorsteuerung vom angesteuerten Zustand in den nicht angesteuerten Zustand strombasiert, wie dies zuvor beschrieben worden ist.

Die eingangs hergeleitete Aufgabe wird auch gelöst durch eine Emulator-steuerung zur Steuerung einer Emulatorleistungselektronik zur Nachbildung eines dreiphasigen bürstenlosen Gleichstrommotors, wobei mit der Emulatorsteuerung die von einer Motorsteuerung angesteuerten Speiseanschlüsse und nicht angesteuerten Speiseanschlüsse ermittelbar sind, und die Emulatorleistungselektronik durch die Emulatorsteuerung so ansteuerbar ist, dass in den durch die Motorsteuerung angesteuerten Speiseanschlüssen von der Emulatorsteuerung auf Grundlage eines Motormodells berechnete Phasenströme $i_{emulate}$ fließen und auf den von dem Motorsteuergerät nicht angesteuerten Speiseanschluss eine von der Emulatorsteuerung auf Grundlage eines Motormodells berechnete Phasenspannung $v_{emulate}$ aufgegeben wird. Bei dieser Emulatorsteuerung erfolgt die Lösung dadurch, dass bei bestimmungsgemäßem Einsatz der Emulatorsteuerung der Übergang eines Speiseanschlusses *j* der Motorsteuerung vom nicht angesteuerten Zustand $S_{PH}(j)=1$ in den angesteuerten Zustand $S_{PH}(j)=0$ dann erkannt wird, wenn der Betrag der Differenzspannung $v_{diff}(j)$ zwischen der an dem Speiseanschluss *j* der Motorsteuerung gemessenen Ausgangsspannung $v_{inv}(j)$ und der berechneten Phasenspannung $v_{emulate}(j)$ für eine vorbestimmte erste Zeitspanne $t_1$ größer ist als ein vorbestimmter Spannungsschwellwert $v_{TH}$ und dass nach Erkennung des Zustandsübergangs des Speiseanschlusses *j* der Motorsteuerung vom nicht angesteuerten Zustand $S_{PH}(j)=1$ in den angesteuerten Zustand $S_{PH}(j)=0$ die Emulatorsteuerung die Emulatorleistungselektronik so ansteuert, dass über den nunmehr durch die Motorsteuerung angesteuerten Speiseanschluss *j* der von der Emulatorsteuerung berechnete Phasenstrom $i_{emulate}$ fließt. Die Emulatorsteuerung wird in bevorzugten Ausführungsbeispielen weiterhin ganz konkret so ausgestaltet, dass sie bei bestimmungsgemäßem Einsatz das zuvor beschriebene Verfahren ausführt, also beispielsweise indem eine von der Emulatorsteuerung umfasste programmierbare Recheneinheit entsprechend programmiert ist.

Im Einzelnen gibt es nun eine Vielzahl von Möglichkeiten, das erfindungsgemäße Verfahren und die erfindungsgemäße Emulatorsteuerung auszugestalten und weiterzubilden. Dazu wird verwiesen einerseits auf die den Patentansprüchen 1 und 15 nachgeordneten Patentansprüche, andererseits auf die folgende Beschreibung von Ausführungsbeispielen in Verbindung mit der Zeichnung. In der Zeichnung zeigen

Fig. 1    eine aus dem Stand der Technik an sich bekannte Anordnung aus Motorsteuerung und Lastemulator zur Durchführung des erfindungsgemäßen Verfahrens,

Fig. 2    die Kommutierungsübergänge innerhalb einer elektrischen Um-drehung an den Speiseanschlüssen einer Motorsteuerung,

Fig. 3    eine ausführliche Darstellung der Anordnung zur Durchführung des erfindungsgemäßen Verfahrens,

Fig. 4    ein Zustandsdiagramm zur Erläuterung der Erfassung des Über-gangs eines Speiseanschlusses der Motorsteuerung vom nicht an-gesteuerten Zustand in den angesteuerten Zustand,

Fig. 5    ein Zustandsdiagramm zur Erläuterung der strombasierten Erkennung des Übergangs eines Speiseanschlusses der Motorsteuerung vom angesteuerten Zustand in den nicht angesteuerten Zu-stand,

Fig. 6    ein Zustandsdiagramm zur Erläuterung der spannungsbasierten Erkennung des Zustandsüberganges des Speiseanschlusses der Motorsteuerung vom angesteuerten Zustand in den nicht angesteuerten Zustand,

Fig. 7    eine Erweiterung des Zustandsdiagramms aus Fig. 6 zur spannungsbasierten Erkennung des Motoraufstartes und

Fig. 8    eine Erweiterung des Zustandsdiagramms aus Fig. 7 zur spannungsbasierten Erkennung des Zustandes, dass alle Speiseanschlüsse der Motorsteuerung angesteuert sind

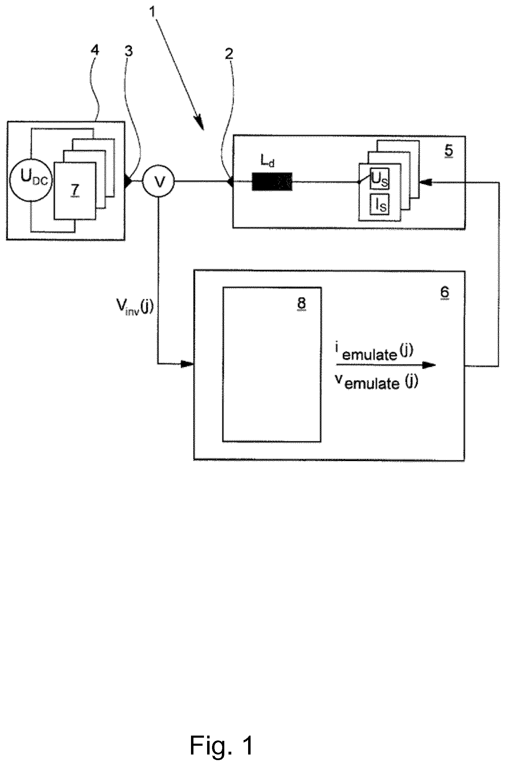

In Fig. 1 ist zunächst dargestellt eine aus dem Stand der Technik an sich bekannte Anordnung zur Durchführung eines Verfahrens zur Nachbildung eines dreiphasigen bürstenlosen Gleichstrommotors mit einem Lastemulator 1, wobei der Lastemulator 1 dreiphasig über seine Lastanschlüsse 2 an die Speiseanschlüsse 3 einer Motorsteuerung 4 angeschlossen ist. Der Lastemulator 1 weist eine Emulatorleistungselektronik 5 und eine Emulatorsteuerung 6 zur Steuerung der Emulatorleistungselektronik 5 auf. Die Motorsteuerung 4 umfasst im vorliegenden Fall selbst auch eine Leistungselektronik in Form eines dreiphasig angedeuteten Wechselrichters 7, der über eine Gleichspannungsquelle $U_{DC}$ leistungsmäßig versorgt wird und durch entsprechende Schaltung der von dem Wechselrichter 7 umfassten Halbleiterschalter über seine Speiseanschlüsse 3 eine dreiphasige Wechsellast treibt.

Das Verfahren sieht vor, dass die Emulatorsteuerung 6 die von der Motorsteuerung 4 angesteuerten und nicht angesteuerten Speiseanschlüsse 3 ermittelt, wobei die Emulatorleistungselektronik 5 durch die Emulatorsteuerung 6 so angesteuert wird, dass in den durch die Motorsteuerung 4 angesteuerten Speiseanschlüssen 3 von der Emulator-steuerung 6 auf Grundlage eines Motor-modells 8 berechnete Phasenströme $i_{emulate}$ fließen und auf den von der Motor-steuerung 4 nicht angesteuerten Speiseanschluss eine von der Emulator-steuerung 6 auf Grundlage des Motormodells 8 berechnete Phasenspannung $v_{emulate}$ aufgegeben wird. Es ist zu erkennen, dass die Emulatorleistungselektronik 5 zur Bewältigung dieser Aufgabe sowohl Stromquellen $I_s$ als auch Spannungsquellen $U_S$ aufweist, die entsprechend auf die Lastanschlüsse 2 der Emulatorleistungselektronik 5 geschaltet werden können, wobei dies im vorliegenden Fall mittelbar für jede Phase über eine Entkopplungsinduktivität $L_d$ erfolgt.

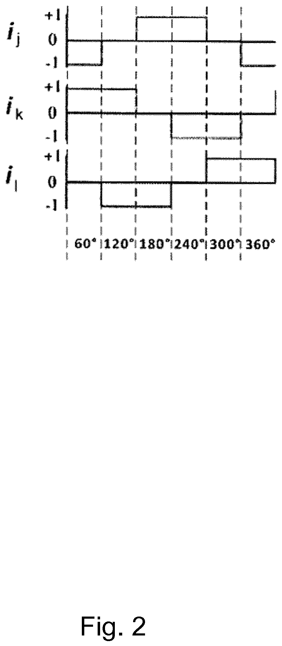

In Fig. 2 sind die sechs innerhalb einer elektrischen Umdrehung auftretenden Kommutierungsübergänge bei einem dreiphasigen blockkommutierten bürstenlosen Gleichstrommotor gezeigt, wobei die Kommutierungen jeweils im elektrischen Winkelabstand von 60° erfolgen. Es ist zu erkennen, dass der unangesteuerte Speiseanschluss nur in einem Kommutierungsintervall in einer Phase erhalten bleibt und danach sofort wieder in den angesteuerten Zustand überwechselt; die Phasen sind hier mit $i_1$, $i_2$ und $i_3$ bezeichnet. Von den beiden angesteuerten Speiseanschlüssen 3 der Motorsteuerung 4 wechselt ein Speiseanschluss in den nicht angesteuerten Zustand, während der andere angesteuerte Speiseanschluss im angesteuerten Zustand verbleibt. Über die blockkommmutierte Ansteuerung wird so ein entsprechendes Drehfeld in dem bürstenlosen Gleichstrommotor erzeugt, mit dem dann ein entsprechendes Drehmoment aufgebracht werden kann.

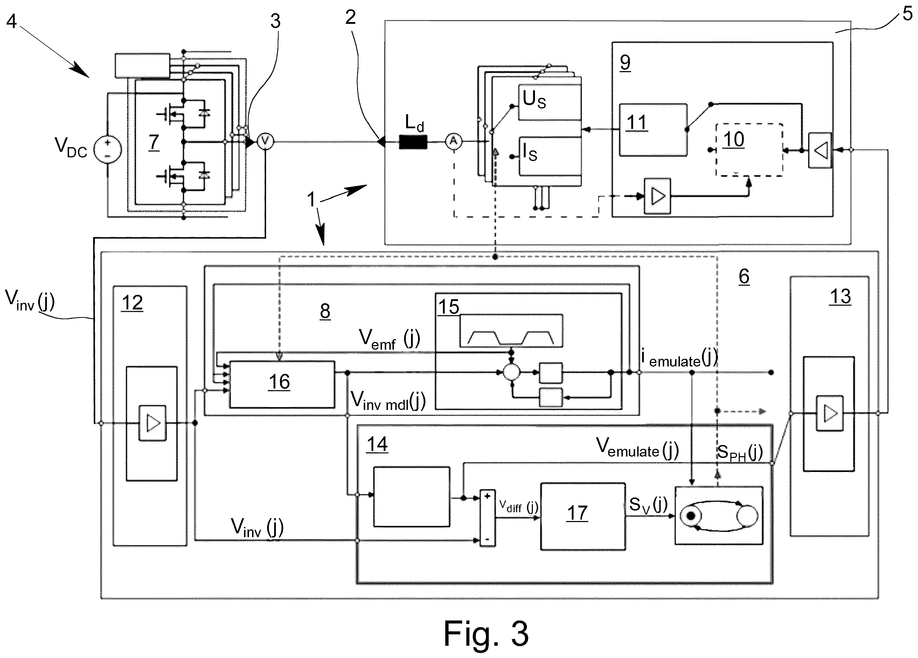

In Fig. 3 ist die Anordnung aus Fig. 1 zur Durchführung des erfindungsgemäßen Verfahrens mit der erfindungsgemäß eingerichteten Emulatorsteuerung 6 noch einmal in einem höheren Detailierungsgrad dargestellt. Innerhalb der Emulatorleistungselektronik 5 ist ein Regler 9 gezeigt, der dafür sorgt, dass die vorgegebenen Phasenströme tatsächlich an den Lastanschlüssen 2 gemäß der Vorgabe aus der Emulatorsteuerung 6 eingestellt werden. Dazu wird innerhalb der Emulatorleistungselektronik 5 der jeweils interessierende Phasenstrom zurückgemessen und einem Regelungsalgorithmus 10 zwecks Bildung einer Regeldifferenz zugeführt. Über einen Modulator 11 wird der jeweils richtigen Phase ein vorgegebener Spannungswert oder ein vorgegebener Stromwert zugewiesen.

Die Emulatorsteuerung 6 ist in dem dargestellten Ausführungsbeispiel auf einem FPGA-Bord realisiert, auf dem "fest verdrahtete" Schaltkreisstrukturen eine besonders schnelle Ausführbarkeit des nachfolgend beschriebenen Verfahrens gewährleisten. Über die einlesende Schnittstelle 12 werden die Ausgangsspannungen $v_{inv}(j)$, die an den Speiseanschlüssen 3 der Motorsteuerung 4 gemessen werden, in die Emulatorsteuerung 6 eingelesen und dort verfügbar gemacht, es handelt sich also um echte Messgrößen. Über die Ausgangsschnittstelle 13 werden die berechneten Sollvorgaben für berechneten Phasenspannungen $v_{emulate}(j)$ und für berechnete Phasenströme $i_{emulate}(j)$ an die Emulatorleistungselektronik 5 ausgegeben.

Innerhalb der Emulatorsteuerung 6 ist darüber hinaus ein Zustandsautomat 14 realisiert, mit dem kommutierungsbedingte Zustandswechsel an den Speiseanschlüssen 3 der Motorsteuerung 4 erkannt werden. Der Zustand des Speiseanschlusses $j$ wird im Folgenden grundsätzlich als $S_{PH}(j)$ bezeichnet, wobei der Wert 1 für den nicht angesteuerten Zustand des Speiseanschlusses $j$ steht und der Wert 0 für den angesteuerten Zustand des betreffenden Speiseanschlusses.

Grundlegend für die Kommutierungserkennung ist, dass der Übergang eines Speiseanschlusses $j$ der Motorsteuerung 4 vom nicht angesteuerten Zustand $S_{PH}(j)=1$ in den angesteuerten Zustand $S_{PH}(j)=0$ dann erkannt wird, wenn der Betrag der Differenzspannung $v_{diff}(j)$ zwischen der an dem Speiseanschluss $j$ der Motorsteuerung 4 gemessenen Ausgangsspannung $v_{inv}(j)$ und der berechneten Phasenspannung $v_{emulate}(j)$ für eine vorbestimmte erste Zeitspanne $t_1$ größer ist als ein vorbestimmter Spannungsschwellwert $v_{TH}$.

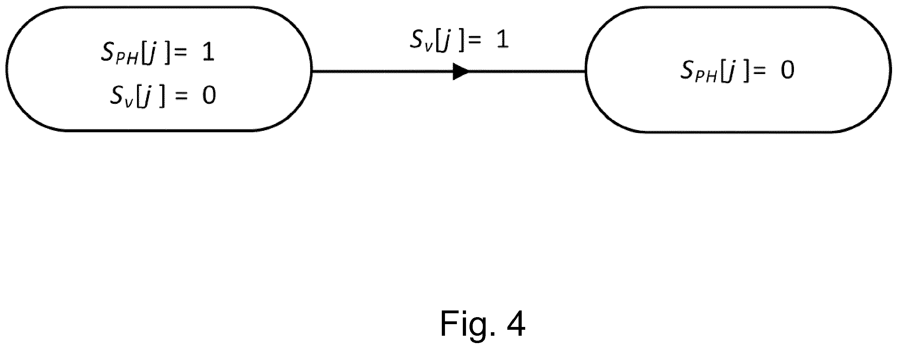

Dieser Sachverhalt ist auch nochmals dargestellt in Fig. 4 anhand eines Zustandsdiagramms, wobei $S_v$ die Hilfszustandsgröße ist, die anzeigt, ob der Betrag der Differenzspannung $v_{diff}(j)$ über einen Mindestzeitraum $t_1$ größer oder kleiner als der vorbestimmte Spannungsschwellwert $v_{TH}$ gewesen ist, es gilt also

$$S_v(j) := \begin{cases} 1, & \min\textit{while time}\, t_1 : \left| v_{diff}(j) \right| \geq v_{TH} \\ 0, & \min\textit{while time}\, t_2 : \left| v_{diff}(j) \right| < v_{TH} \end{cases}$$

Die Fokussierung auf den zunächst nicht angesteuerten Speiseanschluss $j$ ist darin begründet, dass dieser einen eindeutigen Zustandsübergang bei jedem Kommutierungsereignis erfährt und somit ein zwingender Indikator für eine Kommutierung ist. Eine Differenzspannung $v_{diff}(j)$ ist hier in jedem Fall zu erwarten, da die gemessene Ausgangsspannung $v_{inv}(j)$ sich bei einem Schaltvorgang der Motorsteuerung 4 auf einen Randwert der Motorsteuerungsspannung $U_{DC}$ ändert, während die berechnete Spannung $v_{emulate}(j)$ immer noch auf einem vorgegebenen Wert innerhalb des Gleichspannungsintervalls der Motorsteuerung verharrt, weil die Berechnung innerhalb der Emulatorsteuerung 6 von einem nicht angesteuerten Zustand des betreffenden Speiseanschlusses $j$ ausgeht.

Nach der Erkennung des Übergangs des Speiseanschlusses $j$ vom nicht angesteuerten Zustand in den angesteuerten Zustand sieht das in der Emulatorsteuerung 6 implementierte Verfahren weiterhin vor, dass die Emulatorleistungselektronik 5 von der Emulatorsteuerung 6 so angesteuert wird, dass über den nunmehr durch die Motorsteuerung 4 angesteuerten Speiseanschluss $j$ der von der Emulatorsteuerung 6 berechnete Phasenstrom $i_{emulate}(j)$ fließt. Der berechnete Phasenstrom $i_{emulate}(j)$ ergibt sich aus der Berechnung des Motormodells 8 in der Stromberechnung 15.

Das Motormodell 8 simuliert auf Basis der gemessenen Ausgangsspannungen $v_{inv}$ der durch die Motorsteuerung 4 angesteuerten Motorstränge die zu emulierenden Motor-Statorströme $i_{emulate}$. Die Spannung des unbestromten Motorstranges ergibt sich dann aus den gemessenen Ausgangsspannungen $v_{inv}$ der angesteuerten und damit bestromten Motorstränge bzw. Speiseanschlüsse 3 der Motorsteuerung 4 sowie aus den induktiven und magnetischen Eigenschaften des simulierten bürstenlosen Gleichstrommotors. Die magnetischen Eigenschaften sind durch die induzierten Spannungen $v_{emf}$ in den drei Motorphasen beschrieben. Es ergeben sich damit abhängig vom Zustand $S_{PH}$ die folgenden gemessenen Phasenspannungen $v_{inv\_mdl}$ als Eingangsspannungen für die Stromsimulation des Motormodells 8, nämlich die gemessenen Spannungen an den angesteuerten Speiseanschlüssen 3, für die also gilt $S_{PH}(j)=0$ und eine simulierte Spannung für die nicht angesteuerte Phase bzw. für den nicht angesteuerten Speiseanschluss der Motorsteuerung 4. Es handelt sich hier um eine berechnete Spannung, die dann von der Emulatorleistungselektronik 5 ausgegeben wird und deshalb an dem nicht angesteuerten Speiseanschluss der Motorsteuerung 4 gemessen werden kann. Die Berechnung dieser Spannung basiert auf den gemessenen Ansteuerspannungen der angesteuerten und damit bestromten Phasen, auf den stromabhängigen elektrischen induktiven Motor-Eigenschaften, den simulierten Motorströmen sowie auf der Simulation der magnetischen Eigenschaften, nämlich den induzierten Gegenspannungen $v_{emf}$ des simulierten Motors. Die magnetischen Eigenschaften des bürstenlosen Gleichstrommotors werden hier anhand einer look-up-table als Funktion des elektrischen Motorwinkels beschrieben. Deshalb ist zur Simulation der an der Motorsteuerung 4 gemessenen Spannungen im Rahmen einer Umrichterberechnung 16 eine Rückkopplung der elektrischen und magnetischen Eigenschaften aus der Stromsimulation 15 erforderlich. Auf diese Details der Berechnung des Motormodells 8 kommt es zum Verständnis und zur Ausführung der Erfindung nicht an, wichtig ist, dass das Motormodell eine zuverlässige Berechnung der Phasenströme $i_{emulate}$ liefert.

Die zeitliche Überwachung, ob die Differenzspannung $v_{diff}$ eine vorbestimmte Zeit $t_1$ größer oder kleiner dem vorbestimmten Spannungsschwellwert $v_{TH}$ ist, - ausgedrückt durch die oben angegebene Hilfszustandsgröße $S_v$, geschieht in der Spannungsüberwachung 17 des Zustandsautomaten 14.

Auch wenn das Motormodell 8 und die Berechnung des Motormodells 8 nicht hauptsächlicher Gegenstand der vorliegenden Erfindung ist, wird nachfolgend dargestellt, wie eine mögliche Berechnung jedenfalls durchgeführt werden könnte; wie bereits angedeutet, kommt es auf der Berechnung zugrunde liegende Motormodell 8 im Detail nicht an, das verwendete Motormodell 8 mag mit den Ansprüchen an die Genauigkeit des Modells und mit der zur Verfügung stehende Hardware zur Berechnung des Modells variieren. Unter der Annahme von symmetrischen induktiven Eigenschaften in den drei Motorphasen mit Motor-Sternpunktschaltung ergeben sich die folgenden simulierten Phasenspannungen an den Speiseanschlüssen 3 der Motorsteuerung 4:

$$
v_{inv\_mdl}(j) := \begin{cases} v_{inv}(j) & ,if\ S_{PH}(j) = 0\ and\ \sum_{i=1}^{3} S_{PH}(i) \neq 3 \\ \dfrac{\sum_{i=1}^{3}(1 - S_{PH}(i))(v_{inv}(i) - v_{emf}(i))}{3 - \sum_{i=1}^{3} S_{PH}(i)} & ,if\ S_{PH}(j) = 1\ and\ \sum_{i=1}^{3} S_{PH}(i) \neq 3 \\ 0 & ,if\ \sum_{i=1}^{3} S_{PH}(i) = 3 \end{cases}
$$

Die von der Emulatorsteuerung 6 auf Grundlage des Motormodells 8 berechnete Phasenspannung $v_{emulate}$ entspricht im Wesentlichen den vorgenannten simulierten Phasenspannungen der Motorsteuerung 4, sie wird auf einen bestimmten Wert der Zwischenkreisspannung $v_{DC\_Link}$, etwa $v_{DC\_Link}/2$, gesetzt, wenn zwei Phasen bzw. zwei Speiseanschlüsse 3 der Motorsteuerung 4 nicht angesteuert sind, wobei es sich dabei nur um Übergangszustände handelt, oder alle drei Phasen bzw. alle drei Speiseanschlüsse 3 angesteuert sind.

Nachdem es nun gelungen ist, den Speiseanschluss $j$ der Motorsteuerung 4 zu erkennen, der von dem nicht angesteuerten Zustand in den angesteuerten Zustand übergegangen ist, müssen nun die übrigen beiden Speiseanschlüsse 3 der Motorsteuerung 4 eindeutig erkannt werden. Die Detektion des Übergangs eines Speiseanschlusses 3 der Motorsteuerung 4 vom angesteuerten Zustand in den nicht angesteuerten Zustand kann strombasiert oder spannungsbasiert erfolgen, wie dies bereits im allgemeinen Beschreibungsteil erläutert worden ist.

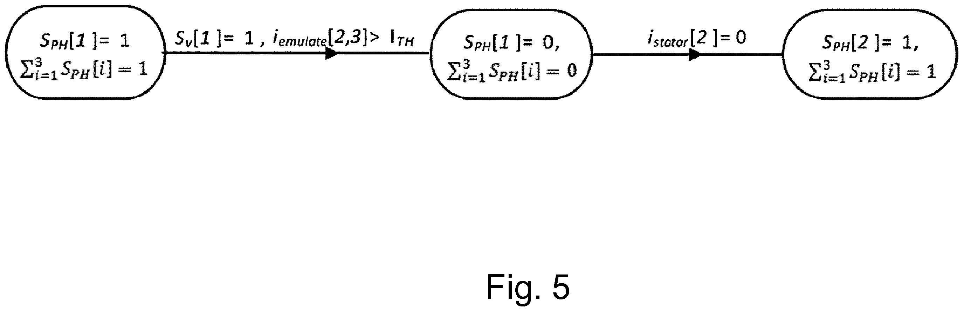

Der zuvor genannte Zustandswechsel wird im strombasierten Fall daran erkannt, dass der berechnete Phasenstrom $i_{emulate}$ am betreffenden Lastanschluss 2 der Lastemulators 1 als Null erfasst wird. Dies ist in Fig. 5 anhand eines weiteren Zustandsdiagramms dargestellt, wobei die Besonderheit hier darin liegt, dass die zur Anwendung kommende strombasierte Erkennung des Zustandswechsels eingesetzt wird, wenn zum Zeitpunkt der Erkennung des Zustandsübergangs des Speiseanschlusses $j$ der Motorsteuerung 4 vom nicht angesteuerten Zustand in den angesteuerten Zustand die Beträge der berechneten Phasenströme $i_{emulate}$ der angesteuerten Speiseanschlüsse $k, l$ über einen Stromschwellwert $i_{TH}$ liegen. Das Kriterium des Stromschwellwertes $i_{TH}$ soll verhindern, dass ein bei geringen Lasten durch Messungenauigkeit, Einstreuungen oder sonst wie sich ergebender Nullstrom zu einer Fehlinterpretation eines Speiseanschlusses 3 führt. Der Übergang von dem in Fig. 5 ganz links dargestellten Zustand zu dem mittleren Übergangszustand betrifft zunächst den nicht angesteuerten Speiseanschluss (hier mit Ziffer 1 gekennzeichnet) und die Erkennung des Übergangs in den angesteuerten Zustand. Der Übergang von dem mittleren Übergangszustand zu dem ganz rechts dargestellten Zustand betrifft dann den mit der Ziffer 2 gekennzeichneten Speiseanschluss der Motorsteuerung 4 bzw. den entsprechenden Lastanschluss 2 des Lastemulators 5, über die der Strom zu Null gemessen wird. Aus diesen Bedingungen resultiert, dass der mit der Ziffer 2 bezeichnete Speiseanschluss nunmehr in den nicht angesteuerten Zustand übergewechselt ist ($S_{PH}(2)=1$).

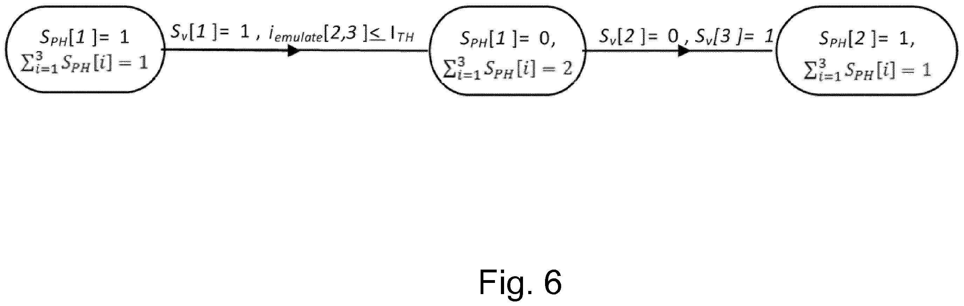

In Fig. 6 ist alternativ die spannungsbasierte Erkennung des Übergangs eines Speiseanschlusses k der Motorsteuerung 4 vom angesteuerten Zustand in den nicht angesteuerten Zustand gezeigt. Der Übergang von dem ganz links dargestellten Zustand zu dem mittleren Übergangszustand zeigt wiederum nur die Erkennung des Übergangs der mit der Ziffer 1 bezeichneten Phase bzw. des entsprechenden Speiseanschlusses der Motorsteuerung 4 vom unangesteuerten Zustand ($SP_H(1)=1$) in den angesteuerten Zustand ($SP_H(1)=0$). Auf die zusätzliche Bedingung, dass der berechnete Strom in den mit den Ziffern 2 und 3 bezeichneten Phasen kleiner als ein Stromschwellwert $i_{TH}$ ist, wird zu einem späteren Zeitpunkt eingegangen. Die Emulatorsteuerung 6 sorgt im mittleren Zustand dafür, dass die Emulatorleistungselektronik und damit die angeschlossene Motorsteuerung in einen Übergangszustand versetzt werden. Es wird nämlich dafür gesorgt, dass die anderen Anschlüsse der Emulatorleistungselektronik, die in den Formeln mit den Ziffern 2 und 3 bezeichnet sind, über eine induktive Entkopplung auf eine vorgegebene Spannung $u_{intermediate}$ gesetzt werden.

Der Übergang eines Speiseanschlusses 3 der Motorsteuerung 4 vom angesteuerten Zustand in den nicht angesteuerten Zustand wird spannungsbasiert genau dann erkannt wird, wenn nach Abklingen des Stroms über den betreffenden Speiseanschluss 3 bzw. den betreffenden Lastanschluss 2 der Emulatorleistungselektronik 5 die von der Emulatorsteuerung 6 zurückgemessene Spannung am Speiseanschluss 3 über eine vorbestimmte zweite Zeitspanne $t_2$ gleich der vorgegebenen Spannung $u_{intermediate}$ ist. Im dargestellten Beispiel wird für die mit der Ziffer 2 bezeichnete Phase das Zutreffen der vorgenannten Bedingung erkannt ($S_V(2) = 0$), so dass klar ist, dass die mit der Ziffer 2 bezeichnete Phase vom angesteuerten Zustand in den nicht angesteuerten Zustand ($S_{ph}(2) = 1$) übergewechselt ist. Im vorliegenden Fall sind die mit den Ziffern 2 und 3 bezeichneten Phasen über die Emulatorleistungselektronik 5 auf jeweils die halbe Zwischenkreisspannung $v_{DC\_Link}$ gesetzt worden.

Da in dem hier gezeigten Beispiel die zweite Phase und damit der zweite Speiseanschluss von der Motorsteuerung 4 nicht mehr angesteuert wird, entspricht nachfolgend die gemessene Spannung $v_{inv}(2)$ an dem zweiten Speiseanschluss der Motorsteuerung 4 der zu emulierenden Spannung, sobald sich der Strom über die entsprechende Freilaufdiode innerhalb der Motorsteuerung 4 abgebaut hat. Wird die Spannung über die vorbestimmte zweite Zeitspanne $t_2$ gehalten, ist der Übergang in den nicht angesteuerten Zustand richtig erkannt worden. Die gemessene Spannung $v_{inv}(3)$ der weiterhin angesteuerten dritten Phase und des weiterhin angesteuerten dritten Speiseanschlusses der Motorsteuerung 4 wird sich dagegen von der aufgegebenen Spannung $u_{intermediate}$, die hier als halbe Zwischenkreisspannung $v_{DC-Link}$ gewählt ist, unterscheiden, da sich aufgrund der induktiven Entkopplung die spannungsmäßige Beschaltung durch die Motorsteuerung 4 an dem dritten Speiseanschluss gegenüber der von der Emulatorleistungselektronik 5 vorgegebenen Spannung durchsetzt.

Das in Fig. 6 zusätzlich dargestellte Kriterium vom Übergang des linken zum mittleren Zustand, nämlich $i_{emulate}(2,3) \leq i_{TH}$ wird hier zusätzlich verwendet, um die Verwendung der spannungsbasierten Zustandserkennung "freizuschalten". In einer bevorzugten Variante wird zwischen der Verwendung der beschriebenen spannungsbasierten und der strombasierten Zustandserkennung anhand des dargestellten Kriteriums bezüglich der angesteuerten Phasenströme entschieden, welches der beiden Verfahren im konkreten Fall zur Anwendung kommt. Die strombasierte Übergangserkennung wird nur bei hinreichend großen Phasenströmen verwendet, um eine Fehlinterpretation bei der strombasierten Erkennung zu vermeiden.

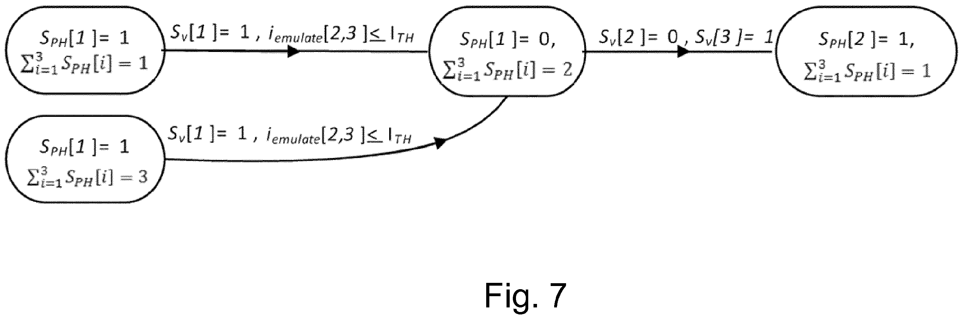

In Fig. 7 ist eine weitere Anwendungsmöglichkeit für die spannungsbasierte Kommutierungserkennung dargestellt. Die oberen drei Zustände und Transitionen zwischen diesen Zuständen sind identisch mit den Zuständen und Transitionen wie in Fig. 6. Neu ist der unten links dargestellte Zustand, in dem keine der drei Phasen bzw. keiner der drei Speiseanschlüsse 3 der Motorsteuerung 4 angesteuert ist. Während des Motoraufstarts wird eine der drei Phasen als angesteuerte Phase - hier wieder die mit der Ziffer 1 bezeichnete Phase bzw. der mit Ziffer 1 bezeichnete Speiseanschluss der Motorsteuerung 4 - über die Hilfszustandsgröße $S_V$ erkannt. Die beiden anderen Phasen bleiben so lange im unbestromten Zustand, bis diese entsprechend der jeweiligen Hilfszustände $S_V$ als unbestromt bzw. angesteuert detektiert werden können.

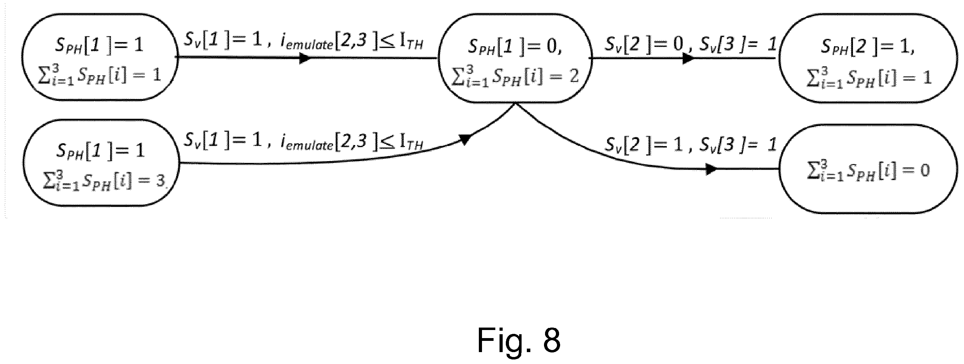

Während des Motoraufstartes ist es insbesondere im sensorlosen Betrieb häufig gebräuchlich, dass alle drei Phasen bestromt bzw. alle drei Speiseanschlüsse der Motorsteuerung 4 angesteuert werden, so lange der blockkommutierte bürstenlose Gleichstrommotor eine bestimmte Mindestdrehzahl noch nicht erreicht hat. Auch dieser spezielle Betriebszustand kann spannungsbasiert erkannt werden, was in Fig. 8 dargestellt ist.

Für den Fall, dass alle Speiseanschlüsse 3 aktiv von der Motorsteuerung 4 angesteuert werden und gleichzeitig die entsprechenden Lastanschlüsse 2 der Emulatorleistungselektronik 5 mit der Hilfsspannung $u_{intermediate}$ angesteuert werden, setzt sich aufgrund der vorausgesetzten induktiven Entkopplung in der Emulatorleistungselektronik 5 an den betroffenen Speiseanschlüssen 3 der Motorsteuerung 4 die von der Motorsteuerung 4 bereitgestellte Spannung an den angesteuerten Speiseanschlüssen 3 durch. Dadurch ist die Differenzspannung $v_{diff}$ zwischen den zurückgemessenen Spannungen $v_{inv}$ und den emulierten Spannungen $v_{emulate}$ ungleich 0 und wird immer größer. Wenn also für die verbleibenden Speiseanschlüsse 3 der Motorsteuerung 4 auch ein Übergang erkannt wird von dem nicht angesteuerten Zustand in den angesteuerten Zustand, befindet sich die Motorsteuerung 4 im dreiphasigen Motoraufstart, also in dem in Fig. 8 unten rechts dargestellten Zustand.

Als zusätzliche Bedingung für den Übergang von dem Zwischenzustand ($S_{PH}(1) = 0$) zu dem Zustand, in dem alle drei Speiseanschlüsse der Motorsteuerung 4 angesteuert sind, wird eingeführt, dass alle Hilfszustandsgrößen $S_V(i)$ über eine definierte Zeit, nämlich eine dritte Zeitspanne $t_3$, dem Wert 1 entsprechen. Bevorzugt wird die dritte Zeitspanne $t_3$ größer gewählt als die vorbestimmte zweite Zeitspanne $t_2$. Die Zeitmessung zu der Ermittlung der dritten Zeitspanne $t_3$ beginnt mit dem Übergang in den Zustand, dass alle Hilfszustandsgrößen $S_V$ den Wert 1 angenommen haben. Die vorbestimmte dritte Zeitspanne $t_3$ muss größer gewählt werden als die vorbestimmte zweite Zeitspanne $t_2$, da ansonsten der in Fig. 8 dargestellte Zustandswechsel in den Zustand $S_{PH}(2)=1$, in dem die zweite Phase die einzige nicht angesteuerte Phase ist, nie erfolgen könnte, denn die Bedingungen $S_V(2)=1$ und $S_V(3)=1$ wären immer früher erfüllt als die Bedingungen $S_V(2)=0$ und $S_V(3)=1$. Der Zeitwert von $t_3$ sollte zusätzlich noch mindestens größer sein um die Latenzzeit zwischen einem Zustandswechsel von einem nicht angesteuerten zu einem angesteuerten Zustand bzw. von einem unbestromten zu einem bestromten Zustand und der Einprägung der entsprechenden zu emulierenden Spannung als die vorbestimmte zweite Zeitspanne $t_2$.

**Patentansprüche**

1. Verfahren zur Nachbildung eines dreiphasigen bürstenlosen Gleichstrommotors mit einem Lastemulator (1), wobei der Lastemulator (1) dreiphasig über seine Lastanschlüsse (2) an die Speiseanschlüsse (3) einer Motorsteuerung (4) angeschlossen ist und der Lastemulator (1) eine Emulatorleistungselektronik (5) und eine Emulatorsteuerung (6) zur Steuerung der Emulatorleistungselektronik (5) aufweist, wobei die Emulatorsteuerung (6) die von der Motorsteuerung (4) angesteuerten Speiseanschlüsse (3) und nicht angesteuerten Speiseanschlüsse (3) ermittelt, und die Emulatorleistungselektronik (5) durch die Emulatorsteuerung (6) so angesteuert wird, dass in den durch die Motorsteuerung (4) angesteuerten Speiseanschlüssen (3) von der Emulatorsteuerung (6) auf Grundlage eines Motormodells (8) berechnete Phasenströme $i_{emulate}$ fließen und auf den von der Motorsteuerung (4) nicht angesteuerten Speiseanschluss (3) eine von der Emulatorsteuerung auf Grundlage eines Motormodells (8) berechnete Phasenspannung $v_{emulate}$ aufgegeben wird,
**dadurch gekennzeichnet,**
**dass** der Übergang eines Speiseanschlusses $j$ der Motorsteuerung (4) vom nicht angesteuerten Zustand $S_{PH}(j)=1$ in den angesteuerten Zustand $S_{PH}(j)=0$ dann erkannt wird, wenn der Betrag der Differenzspannung $v_{diff}(j)$ zwischen der an dem Speiseanschluss $j$ der Motorsteuerung (4) gemessenen Ausgangsspannung $v_{inv}(j)$ und der berechneten Phasenspannung $v_{emulate}(j)$ für eine vorbestimmte erste Zeitspanne $t_1$ größer ist als ein vorbestimmter Spannungsschwellwert $v_{TH}$
und **dass** nach Erkennung des Zustandsübergangs des Speiseanschlusses $j$ der Motorsteuerung vom nicht angesteuerten Zustand $S_{PH}(j)=1$ in den angesteuerten Zustand $S_{PH}(j)=0$ die Emulatorsteuerung (6) die Emulatorleistungselektronik (5) so ansteuert, dass über den nunmehr durch die Motorsteuerung (4) angesteuerten Speiseanschluss $j$ der von der Emulatorsteuerung (6) berechnete Phasenstrom $i_{emulate}(j)$ fließt.

2. Verfahren nach Anspruch 1, wobei vorgesehen ist, dass der Spannungsschwellwert $v_{TH}$ so bemessen ist, dass er größer ist als die während eines konstanten Schaltzustandes der Motorsteuerung (4) und damit der Emulatorleistungselektronik (5) zu erwartende maximale Abweichung zwischen der berechneten Phasenspannung $v_{emulate}(j)$ in der Phase des nicht angesteuerten Speiseanschlusses $j$ und der tatsächlich zurückgemessenen Spannung $v_{inv}(j)$ am nicht angesteuerten Speiseanschlusses $j$, insbesondere wird für den Spannungsschwellwert $v_{TH}$ ein fünftel der Zwischenkreisspannung $v_{DC\_Link}$ der Motorsteuerung (4) gewählt.

3. Verfahren nach Anspruch 1 oder 2, wobei vorgesehen ist, dass die vorbestimmte erste Zeitspanne $t_1$ größer gewählt wird als die Dauer zu erwartender transienter Spannungsverzerrungen, insbesondere durch elektromagnetische Einstrahlung bedingte Spannungsverzerrungen, die umgebungs- und aufbauabhängig sein können, und/oder dass die vorbestimmte erste Zeitspanne $t_1$ größer gewählt wird als die Latenz der Spannungseinprägung durch die Emulatorsteuerung (6) und die Emulatorleistungselektronik (5), insbesondere wobei die erste Zeitspanne $t_1$ im einstelligen Bereich von Mikrosekunden gewählt wird.

4. Verfahren nach einem der Ansprüche 1 bis 3, wobei vorgesehen ist, dass der Übergang eines Speiseanschlusses $k$ der Motorsteuerung (4) vom angesteuerten Zustand $S_{PH}(k)=0$ in den nicht angesteuerten Zustand $S_{PH}(k)=1$ strombasiert dann erkannt wird, wenn der berechnete Phasenstrom $i_{emulate}$ über den Lastanschluss $k$ des Lastemulators (1) und damit über den korrespondierenden Speiseanschluss $k$ als Null erfasst wird.

5. Verfahren nach Anspruch 4, wobei vorgesehen ist, dass die strombasierte Erkennung des Zustandswechsels der Motorsteuerung (4) eines Speiseanschlusses $k$ vom angesteuerten Zustand $S_{PH}(k)=0$ in den nicht angesteuerten Zustand $S_{PH}(k)=1$ dann eingesetzt wird, wenn zum Zeitpunkt der Erkennung des Zustandsübergangs des Speiseanschlusses $j$ der Motorsteuerung (4) vom nicht angesteuerten Zustand $S_{PH}(j)=1$ in den angesteuerten Zustand $S_{PH}(j)=0$ die Beträge der berechneten Phasenströme $i_{emulate}$ der angesteuerten Speiseanschlüsse $k, l$ über einem Stromschwellwert $i_{TH}$ liegen.

6. Verfahren nach Anspruch 5, wobei vorgesehen ist, dass der Stromschwellwert $i_{TH}$ vorgegeben wird zu

$$i_{TH} = \frac{u_{DC\_Link}}{2 L_{PH}} \frac{T}{2}.$$

7.  Verfahren nach einem der Ansprüche 1 bis 3, wobei vorgesehen ist, dass nach Erkennung des Zustandsübergangs des Speiseanschlusses $j$ der Motorsteuerung (4) vom nicht angesteuerten Zustand $S_{PH}(j)=1$ in den angesteuerten Zustand $S_{PH}(j)=0$ die Emulatorleistungselektronik (5) so angesteuert wird, dass die anderen Anschlüsse $k, l$ der Emulatorleistungselektronik (5) über eine induktive Entkopplung auf eine vorgegebene Spannung $u_{intermediate}$ gesetzt werden und wobei der Übergang eines Speiseanschlusses $k$ der Motorsteuerung (4) vom angesteuerten Zustand $S_{PH}(k)=0$ in den nicht angesteuerten Zustand $S_{PH}(k)=1$ spannungsbasiert dann erkannt wird, wenn nach Abklingen des Stroms über den Speiseanschluss $k$ bzw. den Lastanschluss $k$ der Emulatorleistungselektronik (5) die von der Emulatorsteuerung (6) zurückgemessene Spannung am Speiseanschluss $k$ über eine vorbestimmte zweite Zeitspanne $t_2$ gleich der vorgegebene Spannung $u_{intermediate}$ ist.

8.  Verfahren nach Anspruch 7, wobei vorgesehen ist, dass die vorgegebene Spannung $u_{intermediate}$ im Bereich der von der Motorsteuerung (4) geschalteten Gleichspannung $U_{DC}$ ist, insbesondere gleich der halben Zwischenkreisspannung $v_{DC\_Link}$ der Motorsteuerung ist.

9.  Verfahren nach Anspruch 7 oder 8, wobei vorgesehen ist, dass die vorbestimmte zweite Zeitspanne $t_2$ so groß bemessen ist, dass auch bei niedrigen Lastströmen eine sichere Unterscheidung zwischen einem durchgängig angesteuerten Speiseanschluss und einem zuvor angesteuerten, dann aber nicht mehr angesteuerten Speiseanschluss möglich ist, insbesondere wobei $t_2$ im Bereich von 10 Mikrosekunden gewählt ist.

10. Verfahren nach einem der Ansprüche 7 bis 9, wobei vorgesehen ist, dass die Emulatorsteuerung (4) den Lastanschluss $k$ der Emulatorleistungselektronik (5), der als nicht von der Motorsteuerung (4) angesteuert $S_{PH}(k)=1$ erkannt worden ist, so ansteuert, dass die von der Emulatorsteuerung (6) auf Grundlage des Motormodells (8) berechnete Phasenspannung $v_{emulate}$ aufgegeben wird.

11. Verfahren nach einem der Ansprüche 7 bis 10, wobei vorgesehen ist, dass von der Emulatorsteuerung (6) die Erkennung des Übergangs eines Speiseanschlusses $k$ der Motorsteuerung (4) vom angesteuerten Zustand $S_{PH}(k)=0$ in den nicht angesteuerten Zustand $S_{PH}(k)=1$ im Regelfall spannungsbasiert erfolgt, wenn zum Zeitpunkt der Erkennung des Zustandsübergangs des Speiseanschlusses $j$ der Motorsteuerung (4) vom nicht angesteuerten Zustand $S_{PH}(j)=1$ in den angesteuerten Zustand $S_{PH}(j)=0$ die Beträge der berechneten Phasenströme $i_{emulate}$ der angesteuerten Speiseanschlüsse $k, l$ unter einem Stromschwellwert $i_{TH}$ liegen.

12. Verfahren nach einem der Ansprüche 1 bis 11, wobei vorgesehen ist, dass von der Emulatorsteuerung (6) ein Motoraufstart dadurch detektiert wird, dass sich zunächst alle Speiseanschlüsse $j$ der Motorsteuerung (4) im nicht angesteuerten Zustand $S_{PH}(j)=1$ befinden und nachfolgend nach Erkennung des Zustandsübergangs des Speiseanschlusses $j$ der Motorsteuerung (4) vom nicht angesteuerten Zustand $S_{PH}(j)=1$ in den angesteuerten Zustand $S_{PH}(j)=0$ die Emulatorleistungselektronik (5) so angesteuert wird, dass die anderen Anschlüsse $k, l$ der Emulatorleistungselektronik (5) über eine induktive Entkopplung auf eine vorgegebene Spannung $u_{intermediate}$ gesetzt werden.

13. Verfahren nach Anspruch 12, wobei vorgesehen ist, dass von der Emulatorsteuerung (6) ein Motoraufstart mit drei angesteuerten Speiseanschlüssen $j$ der Motorsteuerung (4) nachfolgend dadurch erkannt wird, dass der Betrag der Differenzspannungen $v_{diff}(j)$ zwischen allen an den Speiseanschlüssen (3) der Motorsteuerung (4) gemessenen Ausgangsspannungen $v_{inv}(j)$ und allen jeweils korrespondierenden berechneten Phasenspannungen $v_{emulate}(j)$ für eine vorbestimmte dritte Zeitspanne $t_3$ größer ist als ein vorbestimmter Spannungsschwellwert $v_{TH}$.

14. Verfahren nach Anspruch 13, wobei vorgesehen ist, dass die vorbestimmte dritte Zeitspanne $t_3$ größer ist als die vorbestimmte zweite Zeitspanne $t_2$ gemäß Anspruch 7, insbesondere wobei die vorbestimmte dritte Zeitspanne $t_3$ mindestens um die Latenzzeit zwischen einem Zustandswechsel von dem nicht angesteuerten Zustand in den angesteuerten Zustand und der für die Einprägung der entsprechenden zu emulierenden Spannung größer ist als die vorbestimmte zweite Zeitspanne $t_2$ gemäß Anspruch 7.

**Claims**

1.  A method for emulating a three-phase brushless direct-current motor by means of a load emulator (1), the load connections (2) of the load emulator (1) being connected in three phases to the feed connections (3) of a motor controller (4) and the load emulator (1) comprising emulator power electronics (5) and an emulator controller (6) for controlling the emulator power electronics (5), the emulator controller (6) determining the feed connections (3) controlled by the motor controller (4) and the non-controlled feed connections (3), and the emulator power electronics (5) being actuated by the emulator controller (6) so that phase currents $i_{emulate}$ calculated on the basis of a motor model (8) flow in the feed connections (3) controlled by the motor controller (4), and a phase voltage $v_{emulate}$ calculated by the emulator controller on the basis of a motor model (8) is applied to the feed connection (3) not actuated by the motor controller (4),

**characterized in that,**

the transition of a feed connection $j$ of the motor controller (4) from the non-actuated state $S_{PH}(j)=1$ to the actuated state $S_{PH}(j)=0$ is detected when the magnitude of the differential voltage $v_{diff}(j)$ between the output voltage $v_{inv}(j)$ measured at the feed connection $j$ of the motor controller (4) and the calculated phase voltage $v_{emulate}(j)$ is greater than a predefined voltage threshold $v_{TH}$ for a predefined first span of time $t_1$,

and that after detecting the state transition of the feed connection $j$ of the motor controller from the non-actuated state $S_{PH}(j)=1$ to the actuated state $S_{PH}(j)=0$, the emulator controller (6) actuates the emulator power electronics (5) such that the phase current $i_{emulate}(j)$ calculated by the emulator controller (6) flows through the feed connection $j$ now actuated by the motor controller (4).

2. The method according to claim 1, **characterized in that** the voltage threshold $v_{TH}$ is sized so as to be greater than the maximum deviation expected between the calculated phase voltage $v_{emulate}(j)$ in the phase of the non-actuated feed connection $j$ and the actual measured voltage $v_{inv}(j)$ at the non-actuated feed connection $j$ while the switching state of the motor controller (4) and thus of the emulator power electronics (5) is constant; particularly, one-fifth of the intermediate circuit voltage $v_{DC\_Link}$ of the motor controller (4) is selected for the voltage threshold $v_{TH}$.

3. The method according to claim 1 or 2, **characterized in that** the predefined first span of time $t_1$ is selected to be greater than the duration of expected transient voltage distortions, particularly voltage distortions induced by electromagnetic radiation and potentially dependent on the environment and setup, and/or that the predetermined first span of time $t_1$ is selected to be greater than the latency of the voltage propagation through the emulator controller (6) and the emulator power electronics (5), particularly wherein the first span of time $t_1$ is selected in the single-digit range of microseconds.

4. The method according to any one of the claims 1 through 3, **characterized in that** the transition of a feed connection $k$ of the motor controller (4) from the actuated state $S_{PH}(k)=0$ to the non-actuated state $S_{PH}(k)=1$ is detected on a current basis when the calculated phase current $i_{emulate}$ through the load connection $k$ of the load emulator (1) and thus through the corresponding feed connection $k$ is detected as zero.

5. The method according to claim 4, **characterized in that** the current-based detecting of the state change of the motor controller (4) of a feed connection $k$ from the actuated state $S_{PH}(k)=0$ to the non-actuated state $S_{PH}(k)=1$ is applied when the magnitudes of the calculated phase currents $i_{emulate}$ of the actuated feed connections $k, l$ are above a current threshold $i_{TH}$ at the point in time of detecting the state transition of the feed connection $j$ of the motor controller (4) from the non-actuated state $S_{PH}(k)=1$ to the actuated state $S_{PH}(k)=0$.

6. The method according to claim 5, **characterized in that** the current threshold $i_{TH}$ is defined as

$$i_{TH} = \frac{u_{DC\_Link}}{2\,L_{PH}} \frac{T}{2}.$$

7. The method according to any one of the claims 1 through 3, **characterized in that** after detecting the state transition of the feed connection $j$ of the motor controller (4) from the non-actuated state $S_{PH}(j)=1$ to the actuated state $S_{PH}(j)=0$, the emulator power electronics (5) are actuated such that the other connections $k, l$ of the emulator power electronics (5) are set to a predefined voltage $u_{intermediate}$ by means of an inductive decoupling, and wherein the transition of a feed connection $k$ of the motor controller (4) from the actuated state $S_{PH}(k)=0$ to the non-actuated state $S_{PH}(k)=1$ is detected on a voltage basis when, after the current through the feed connection $k$ and the load connection $k$ of the emulator power electronics (5) has abated, the voltage measured by the emulator controller (6) at the feed connection $k$ over a predefined span of time $t_2$ is equal to the predefined voltage $u_{intermediate}$.

8. The method according to claim 7, **characterized in that** the predefined voltage $u_{intermediate}$ is in the range of the direct-current voltage $U_{DC}$ switched by the motor controller (4), particularly equal to half of the intermediate circuit voltage $v_{DC\_Link}$ of the motor controller.

9. The method according to claim 7 or 8, **characterized in that** the predefined second span of time $t_2$ is sized great

enough so that even in case of low load currents, reliably differentiating between a continuously actuated feed connection and a previously actuated, but then no longer actuated feed connection is possible, particularly wherein $t_2$ is selected in the range of 10 microseconds.

10. The method according to any one of the claims 7 through 9, **characterized in that** the emulator controller (4) actuates the load connection $k$ of the emulator power electronics (5) detected as not actuated $SPH(k)=1$ by the motor controller (4), such that the phase voltage $v_{emulate}$ calculated by the emulator controller (6) on the basis of the motor model (8) is applied.

11. The method according to any one of the claims 7 through 10, **characterized in that** the detecting of the transition of a feed connection $k$ of the motor controller (4) from the actuated state $S_{PH}(k)=0$ to the non-actuated state $S_{PH}(k)=1$ is typically performed by the emulator controller (6) on a voltage basis if, at the point in time of detecting the state transition of the feed connection $j$ of the motor controller (4) from the non-actuated state $S_{PH}(j)=1$ to the actuated state $S_{PH}(j)=0$, the magnitudes of the calculated phase currents $i_{emulate}$ of the actuated feed connections $k, l$ are below a current threshold $i_{TH}$.

12. The method according to any one of the claims 1 through 11, **characterized in that** a motor starting is detected by the emulator controller (6) **in that** at first all feed connections $j$ of the motor controller (4) are in the non-actuated state $S_{PH}(j)=1$ and subsequently, after detecting the state transition of the feed connection $j$ of the motor controller (4) from the non-actuated state $S_{PH}(j)=1$ to the actuated state $S_{PH}(j)=0$, the emulator power electronics (5) are actuated such that the other connections $k, l$ of the emulator power electronics (5) are set to a predefined voltage $u_{intermediate}$ by means of an inductive decoupling.

13. The method according to claim 12, **characterized in that** a motor start by means of three actuated feed connections $j$ of the motor controller (4) is subsequently detected by the emulator controller (6) **in that** the magnitude of the differential voltages $v_{diff}(j)$ between all output voltages $v_{inv}(j)$ measured at the feed connections (3) of the motor controller (4) and all corresponding calculated phase voltages $v_{emulate}(j)$ is greater than a predefined voltage threshold $v_{TH}$ for a predefined third span of time $t_3$.

14. The method according to claim 13, **characterized in that** the predefined third span of time $t_3$ is greater than the predefined second span of time $t_2$ according to claim 7, particularly wherein the predefined third span of time t3 is greater than the predefined second span of time t2 according to claim 7 by at least the latency time between a state change from the non-actuated state to the actuated state and that of propagating the corresponding voltage to be emulated.

**Revendications**

1. Procédé pour simuler un moteur à courant continu triphasé sans balai avec un émulateur de charge (1), dans lequel l'émulateur de charge (1) est raccordé en trois phases via ses raccords de charge (2) aux raccords d'alimentation (3) d'une unité (4) de commande de moteur et l'émulateur de charge (1) comporte une unité électronique (5) de puissance d'émulateur et une commande (6) d'émulateur pour la commande de l'unité électronique (5) de puissance d'émulateur, dans lequel la commande (6) d'émulateur détermine les raccords d'alimentation (3) pilotés par la commande (4) de moteur et les raccords d'alimentation (3) non pilotés, et l'unité électronique (5) de puissance d'émulateur est pilotée par la commande (6) d'émulateur de sorte que des courants de phase $i_{emulate}$ calculés par la commande (6) d'émulateur sur la base d'un modèle (8) de moteur circulent dans les raccords d'alimentation (3) pilotés par la commande (4) de moteur et qu'une tension de phase $v_{emulate}$ calculée par la commande d'émulateur sur la base d'une modèle (8) de moteur soit appliquée sur le raccord (3) d'alimentation non piloté par la commande (4) de moteur,

   **caractérisé en ce que**

   la transition d'un raccord d'alimentation $j$ de la commande (4) de moteur de l'état non piloté $S_{PH}(j)=1$ à l'état piloté $S_{PH}(j)=0$ est identifié si la valeur de la tension différentielle $v_{diff}(j)$ entre la tension de sortie $v_{inv}(j)$ mesurée au raccord d'alimentation $j$ de la commande (4) de moteur et la tension de phase $v_{emulate}(j)$ calculée pour une première période de temps prédéterminée $t_1$ est supérieure à une valeur seuil de tension prédéterminée $v_{TH}$,

   et que, après l'identification de la transition d'état du raccord d'alimentation $j$ de la commande de moteur de l'état non piloté $S_{PH}(j)=1$ à l'état piloté $S_{PH}(j)=0$, la commande (6) d'émulateur commande l'unité électronique (5) de puissance d'émulateur de manière à ce que le courant de phase $i_{emulate}(j)$ calculé par la commande (6) d'émulateur circule à travers le raccord d'alimentation $j$ à présent pilotée par la commande (4) de moteur.

**2.** Procédé selon la revendication 1, **caractérisé en ce que** la valeur seuil de tension $v_{TH}$ est dimensionnée de manière à être supérieure à l'écart maximale entre la tension de phase calculée $v_{emulate}(j)$ dans la phase du raccord d'alimentation non piloté $j$ et la tension $vinv(j)$ effectivement mesurée au raccord non piloté $j$, prévisible durant un état de commutation constant de la commande (4) de moteur, et donc de l'unité électronique (5) de puissance d'émulateur, en particulier, qu'un cinquième de la tension de circuit intermédiaire $v_{DC\_Link}$ de la commande (4) de moteur est choisi pour la valeur seuil de tension $v_{TH}$.

**3.** Procédé selon la revendication 1 ou 2, **caractérisé en ce que** la première période de temps prédéterminée $t_1$ est choisie plus longue que la durée des distorsions de tension transitoires prévisibles, en particulier des distorsions de tension occasionnées par l'irradiation électromagnétique, qui dépendre de l'environnement et du montage, et/ou que la première période de temps prédéterminée $t_1$ est choisie plus longue que la latence de l'allocation de tension par la commande (6) d'émulateur et l'unité électronique (5) de puissance d'émulateur, dans lequel en particulier la première période de temps $t_1$ est choisie dans la plage à un chiffre de microsecondes.

**4.** Procédé selon l'une des revendications 1 à3, **caractérisé en ce que** la transition d'un raccord d'alimentation $k$ de la commande (4) de moteur de l'état piloté $S_{PH}(k)=0$ à l'état non piloté $S_{PH}(k)=1$ est identifié sur la base du courant si le courant de phase calculé $i_{emulate}$ est détecté en tant que nul au raccord de charge $k$ de l'émulateur (1) de charge, et donc au raccord d'alimentation $k$ correspondant.

**5.** Procédé selon la revendication 4, **caractérisé en ce que** l'identification basée sur le courant, par la commande (4) de moteur, du changement d'état d'un raccord d'alimentation $k$ de l'état piloté $S_{PH}(k)=0$ à l'état non piloté $S_{PH}(k)=1$ est utilisé si, au moment de l'identification de la transition d'état du raccord d'alimentation $j$ de la commande (4) de moteur de l'état non piloté $S_{PH}(j)=1$ à l'état piloté $S_{PH}(j)=0$, les valeurs des courants de phase calculées $i_{emulate}$ des raccords d'alimentation pilotés $k, l$ sont supérieures à une valeur seuil de courant $i_{TH}$.

**6.** Procédé selon la revendication 5, **caractérisé en ce que** la valeur seuil de courant $i_{TH}$ est allouée selon la formule

$$i_{TH} = \frac{u_{DC\_Link}}{2 L_{PH}} \frac{T}{2}.$$

**7.** Procédé selon l'une des revendications 1 à 3, **caractérisé en ce que**, après l'identification de la transition d'état du raccord d'alimentation $j$ de la commande (4) de moteur de l'état non piloté $S_{PH}(j)=1$ à l'état piloté $S_{PH}(j)=0$, l'unité électronique (5) de puissance d'émulateur est piloté de sorte que les autres raccords $k, l$ de l'unité électronique (5) de puissance d'émulateur soient réglés sur une tension allouée $u_{intermediate}$ par découplage inductif et dans lequel la transition d'un raccord d'alimentation $k$ de la commande (4) de moteur de l'état piloté $S_{PH}(k)=0$ à l'état non piloté $S_{PH}(k)=1$ est détectée sur la base de la tension si, après le déclin du courant à travers le raccord d'alimentation $k$ ou le raccord de charge $k$ de l'unité électronique (5) de puissance d'émulateur, la tension mesurée par la commande (6) d'émulateur au raccord d'alimentation $k$ pendant une seconde période de temps prédéterminée $t_2$ est égale à la température allouée $u_{intermediate}$ ist.

**8.** Procédé selon la revendication 7, **caractérisé en ce que** la tension allouée $u_{intermediate}$ se situe dans la plage de la tension continue $U_{DC}$ commutée par la commande (4) de moteur, en particulier, est égale à la moitié de la tension de circuit intermédiaire $v_{DC\_Link}$ de la commande de moteur.

**9.** Procédé selon la revendication 7 ou 8, **caractérisé en ce que** la seconde période de temps prédéterminée $t_2$ est dimensionnée de manière à ce qu'il soit possible de distinguer fiablement, même en présence de courants de charge faibles, un raccord d'alimentation piloté continuellement d'un raccord d'alimentation piloté auparavant, mais qui n'est plus piloté, en particulier, dans lequel $t_2$ est choisie dans la plage proche de 10 microsecondes.

**10.** Procédé selon l'une des revendications 7 à 9, **caractérisé en ce que** la commande (4) d'émulateur pilote le raccord de charge $k$ de l'unité électronique (5) de puissance d'émulateur, qui n'a pas été identifié en tant que piloté $S_{PH}(k)=1$ par la commande (4) de moteur, de manière à ce que la tension de phase $v_{emulate}$ calculée par la commande (6) d'émulateur sur la base du modèle (8) soit appliquée.

**11.** Procédé selon l'une des revendications 7 à 10, **caractérisé en ce que** l'identification, par la commande (6) d'émulateur, de la transition d'un raccord d'alimentation $k$ de la commande (4) de moteur de l'état piloté $S_{PH}(k)=0$ à l'état non piloté $S_{PH}(k)=1$ s'effectue en règle générale sur la base de tension si, au moment de l'identification de la transition d'état du raccord d'alimentation $j$ de la commande (4) de moteur de l'état non piloté $S_{PH}(j)=1$ à l'état piloté $S_{PH}(j)=0,$ les valeurs des courants de phase calculées $i_{emulate}$ des raccords d'alimentation pilotés $k, l$ sont inférieurs à une valeur seuil de courant $i_{TH}$.

**12.** Procédé selon l'une des revendications 1 à 11, **caractérisé en ce qu'**un démarrage du moteur est détecté par la commande (6) d'émulateur par ce que tous les raccords d'alimentation $j$ de la commande (4) de moteur sont d'abord à l'état non piloté $S_{PH}(j)=1$ et ensuite, après l'identification de la transition d'état du raccord d'alimentation $j$ de la commande (4) de moteur de l'état non piloté $S_{PH}(j)=1$ à l'état piloté $S_{PH}(j)=0,$ l'unité électronique (5) de puissance d'émulateur est piloté de manière à ce que les autres raccords $k, l$ de l'unité électronique (5) de puissance d'émulateur soit réglés sur une tension allouée $u_{intermediate}$ par découplage inductif.

**13.** Procédé selon la revendication 12, **caractérisé en ce qu'**un démarrage du moteur avec trois raccords d'alimentation pilotés $j$ de la commande (4) de moteur est ensuite détecté par la commande (6) d'émulateur par ce que la valeur des tensions différentielles $v_{diff}(j)$ entre toutes les tensions de sortie $v_{inv}(j)$ mesurées aux raccords d'alimentation (3) de la commande (4) de moteur et toutes les tensions de phase calculées respectivement correspondantes $v_{emulate}(j)$ est supérieure à une valeur seuil de tension $v_{TH}$ pendant une troisième période prédéterminée $t_3$.

**14.** Procédé selon la revendication 13, **caractérisé en ce que** la troisième période de temps prédéterminée $t_3$ est plus longue que la seconde période de temps prédéterminée $t_2$ selon la revendication 7, dans lequel en particulier la troisième période de temps prédéterminée $t_3$ est plus longue que la seconde période de temps prédéterminée $t_2$ selon la revendication 7 d'au moins la période de latence entre un changement d'état de l'état non piloté à l'état piloté et l'application de la tension correspondante, devant être simulée.

Fig. 1

Fig. 2

Fig. 3

EP 2 940 857 B1

EP 2 940 857 B1

$S_{PH}[j] = 1$

$S_v[j] = 0$

$S_v[j] = 1$

$S_{PH}[j] = 0$

Fig. 4

$S_{PH}[1] = 1$
$\sum_{i=1}^{3} S_{PH}[i] = 1$

$S_v[1] = 1$ , $i_{emulate}[2,3] > I_{TH}$

$S_{PH}[1] = 0,$
$\sum_{i=1}^{3} S_{PH}[i] = 0$

$i_{stator}[2] = 0$

$S_{PH}[2] = 1,$
$\sum_{i=1}^{3} S_{PH}[i] = 1$

Fig. 5

EP 2 940 857 B1

State 1: $S_{PH}[1] = 1$, $\sum_{i=1}^{3} S_{PH}[i] = 1$

Arrow: $S_v[1] = 1$, $i_{emulate}[2,3] \leq I_{TH}$

State 2: $S_{PH}[1] = 0$, $\sum_{i=1}^{3} S_{PH}[i] = 2$

Arrow: $S_v[2] = 0$, $S_v[3] = 1$

State 3: $S_{PH}[2] = 1$, $\sum_{i=1}^{3} S_{PH}[i] = 1$

Fig. 6

EP 2 940 857 B1

Fig. 7

Fig. 8

EP 2 940 857 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DR. THOMAS SCHULTE ; NILS HOLTHAUS ; MARKUS PLÖGER.** E-Motoren: HIL-Test mit voller Leistung. *Fachmagazin "Automobil-Elektronik,* Februar 2010